# EUROPEAN PATENT APPLICATION

(11) **EP 2 876 763 A1**
(43) Date of publication of application: **27.05.2015**
(21) Application number: 13820028.2
(22) Date of filing: 16.07.2013
(51) Int. Cl.: H02G 11/00, B60R 16/02

(54) **ARM POWER SUPPLY DEVICE**

(30) Priority: 17.07.2012 JP 2012158595
(71) Applicant: Yazaki Corporation, Minato-ku Tokyo 108-8333 (JP)
(72) Inventor: TERADA, Tomoyasu, Makinohara-shi Shizuoka 421-0407 (JP); SEKINO, Tsukasa, Makinohara-shi Shizuoka 421-0407 (JP); YAMASHITA, Hiroshi, Makinohara-shi Shizuoka 421-0407 (JP); OKAMOTO, Daisuke, Makinohara-shi Shizuoka 421-0407 (JP)
(74) Representative: Grünecker Patent- und Rechtsanwälte PartG mbB
(86) International application number: PCT/JP2013/069244
(87) International publication number: WO 2014/013965

(57) **Abstract**

An object is to prevent a wire harness from hanging down from a rotational base end side of a second arm and from shaking in the upward and downward direction when the wire harness is fixed only to a rotation tip side of the second arm axially supported to a first arm and the second arm rotates and is positioned on a lower side. In order to solve the above object, an arm power supply device (1) includes a first arm (3) configured to be rotatably and axially supported to a base member (2), and a second arm (8) configured to be rotatably and axially supported on a rotation tip side of the first arm. The second arm includes a harness insertion groove (59) and a harness fixing portion (58) on a rotation tip side. There is employed a configuration in which an outer wall (64) of the harness insertion groove is extended longer than an inner wall (66) on a rotational base end side, the outer wall includes an inclined or bent guide wall portion (67) on the rotational base end side, and a wire harness (28) is guided upward along the guide wall portion when the second arm rotates to the lower side.

## Description

### Technical Field

The present invention, for example, relates to an arm power supply device which is mounted on a slide door of an automobile and wires a wire harness to a vehicle body side while supporting the wire harness by a second arm connected to a first arm to be freely rotated.

### Background Art

In an arm power supply device of the related art, for example, Patent Literature 1 (not illustrated) discloses a technology in which a link arm is axially supported to be freely rotated in a plate protector base which is vertically disposed in the slide door of an automobile, the link arm is urged upward by a torsion coil spring, a harness holder is axially supported to be freely rotated in the link arm, the wire harness is wired from the slide door side to the harness holder along the protector base in an approximate S shape, and thus the wire harness is wired from the harness holder to the vehicle body side.

The harness holder includes a holder base of an approximate rectangular shape and a holder cover which has a size corresponding to about the half of the holder base and is fixed by being screwed into a rotation tip (the first half) side of the holder base. One end of the wire harness is fixed to a rotational base end side of the holder base by a binding band while being supported between the holder base and the holder cover, and the other end of the wire harness is fixed to the protector base. The protector base is fixed to a door inner panel, and the link arm and the harness holder rotate between the protector base and a door trim according to opening and closing of the slide door.

### Citation List

### Patent Literature

Patent Literature 1: JP 2009-65814 A (Figs. 1 and 2)

### Summary of Invention

### Technical Problem

However, in the above arm power supply device of the related art, since the holder cover of the harness holder (a second arm) is sized as large as about the half of the holder base, the weight of the harness holder is increased, then the harness holder may not smoothly rotate with respect to the link arm (a first arm).

Further, since the wire harness is fixed to the rotational base end side of the harness holder, the wire harness is bent in a small radius around the rotational base end side of the harness holder upon rotating of the harness holder and accordingly a major stress may be caused.

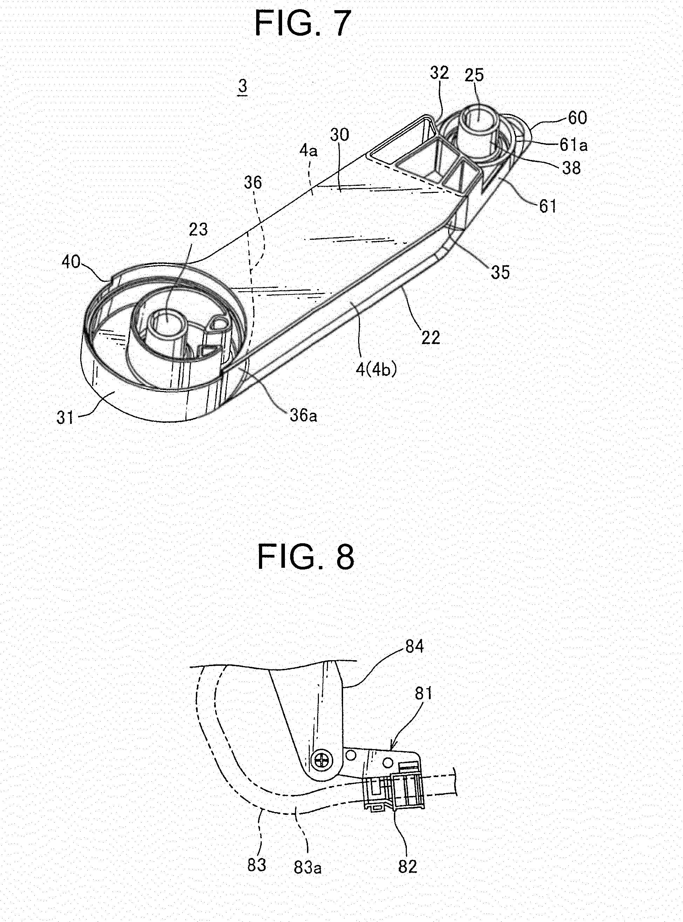

Then, for example, as illustrated in the example of Fig. 8, in a case where a wire harness 83 is fixed not on the rotational base end side of a second arm 81 which is the harness holder but in the center in a longitudinal direction of the second arm 81 or on a rotation tip side 82, when a first arm 84 rotates downward and the second arm 81 is positioned substantially horizontal as illustrated in Fig. 8, the wire harness 83 hangs down on the rotational base end side of the second arm 81 (the hanging-down portion is denoted by symbol 83a) and interferes with the lower end of a door trim (not illustrated) or the peripheral components. Therefore, the wire harness is exposed from the lower end of the door trim, and thus the visibility from the outside of the vehicle may be degraded, or the wire harness 83 is shaken up and down around a harness fixing portion 82 of the second arm 81 (causing deflection on both side), so that the bending resistance of the wire harness 83 maybe lowered.

Further, for example, when the first arm 84 of Fig. 8 rotates upward in the clockwise direction, the second arm 81 rotates and is positioned on the upper side, and the second arm 81 is extended and aligned with the first arm 84 in substantial straight line, the wire harness 83 is bent upward to be folded in a small radius from the rotational base end side of the second arm 81, so that a major stress may be applied on the wire harness 83.

The invention has been made in view of the above circumstances, and an object is to provide an arm power supply device in which even in a case where the wire harness is fixed only on a rotation tip side of the second arm axially supported to the first arm, when the second arm rotates and is positioned on the lower side, the hanging-down of the wire harness from the rotational base end side of the second arm can be prevented, and the deflection of the wire harness in the upward and downward direction around the rotational base end side of the second arm can be prevented. In addition, when the second arm rotates and is positioned on the upper side, the wire harness can be smoothly derived upward from the rotational base end side of the second arm without any stress.

### Solution to Problem

In order to attain the above object, an arm power supply device according to claim 1 of the invention includes a first arm configured to be rotabably and axially supported to a base member, and a second arm configured to be rotatably and axially supported on a rotation tip side of the first arm. The second arm includes a harness insertion groove and a harness fixing portion on a rotation tip side. An outer wall of the harness insertion groove is extended longer than an inner wall on a rotational base end side. The outer wall includes an inclined or bent guide wall portion on the rotational base end side. A wire harness is guided upward along the guide wall portion when the second arm rotates to the lower side.

With the above configuration, the wire harness is fixed to the harness fixing portion on the rotation tip side of the second arm, and the wire harness is inclined or bent along the guide wall portion on the rotational base end side (the end side opposite to the rotation tip side) of the second arm. The first arm rotates in upward and downward direction, and the second arm rotates in upward and downward direction or front and rear direction (that is, an inward and outward direction) on the rotation tip side of the first arm. The "outer wall" of the harness insertion groove of the second arm is a wall portion to be the lower side when the first arm rotates downward and the second arm rotates and is positioned on the lower side, and the "inner wall" is a wall portion to be the upper side. When the second arm rotates and is positioned on the lower side, the wire harness is derived upward from the rotational base end of the harness insertion groove along the guide wall portion. Therefore, the hanging-down of the wire harness from the rotational base end of the second arm is prevented. Further, since the outer wall of the harness insertion groove is extended on the rotational base end side longer than the inner wall, the wire harness is supported by the guide wall portion of the outer wall, and is shaken only upward not downward. Therefore, the deflection on both sides of the wire harness around the rotational base end of the second arm is prevented, and the bending stress of the wire harness is reduced.

An arm power supply device according to claim 2, in the arm power supply device of claim 1, is characterized in that an outwardly bent portion is formed in the rotational base end of the guide wall portion.

With the above conf iguration, the first arm rotates upward, the second arm rotates and is positioned on the upper side, and the second arm and the first arm are extended substantially in line or at an angle almost in line, a force is applied to the wire harness to bend the wire harness upward from the rotational base end of the second arm, but the wire harness is derived while being smoothly bent upward along the bent portion of the rotational base end of the second arm, so that the bending stress of the wire harness is reduced.

The arm power supply device according to claim 3, in the arm power supply device of claim 2, is characterized in that the bent portion is formed to be extended even in the rotational base end of a side wall connecting the outer wall of the harness insertion groove and the inner wall.

### Advantageous Effects of Invention

With the above configuration, when the wire harness is shaken in the right and left direction (a plate thickness direction of the side wall) at the time of rotating the first arm and the second arm, the bent portion at the rotational base end of the side wall of the harness insertion groove of the second arm smoothly receives the wire harness, so that the bending stress of the wire harness is reduced.

According to the invention described in claim 1, when the second arm rotates on the lower side, the wire harness is derived upward along the guide wall portion of the second arm, and thus the hanging-down of the wire harness from the second arm is prevented, and an interference between the wire harness and the lower end of the door trim or other components (for example) caused by the handing-down of the wire harness and degraded visibility from the outside of the vehicle can be prevented. Further, since the wire harness is supported by the guide wall portion of the outer wall extended longer than the inner wall of the second arm, the deflection on both sides in the upward and downward direction of the wire harness is prevented, and the bending stress on the wire harness is reduced, so that the bending resistance of the wire harness can be improved.

According to the invention described in claim 2, when the second arm rotates on the lower side, the wire harness is smoothly bent upward along the bent portion of the rotational base end of the second arm, so that the bending stress on the wire harness is reduced and thus the bending resistance of the wire harness can be increased.

According to the invention described in claim 3 , regarding to the shaking in the right and left direction (the plate thickness direction of the side wall) of the wire harness, the wire harness is smoothly received by the bent portion at the rotational base end of the side wall of the harness insertion groove of the second arm, so that the bending stress and the damage on the wire harness can be reduced.

### Brief Description of Drawings

Fig. 1 is a front view illustrating an embodiment of an arm power supply device according to the invention.
Fig. 2 is a plan view (top view) illustrating the arm power supply device.
Fig. 3 is a front view illustrating an operation of an arm power supply device.
Fig. 4 is a perspective view illustrating an aspect of a base member in the arm power supply device.
Fig. 5 is a front view illustrating an aspect of a second arm in the arm power supply device.
Fig. 6 is a perspective view illustrating the second arm.
Fig. 7 is a perspective view illustrating an aspect of a first arm in the arm power supply device.
Fig. 8 is a front view illustrating main parts of an arm power supply device in the related art.

### Description of Embodiments

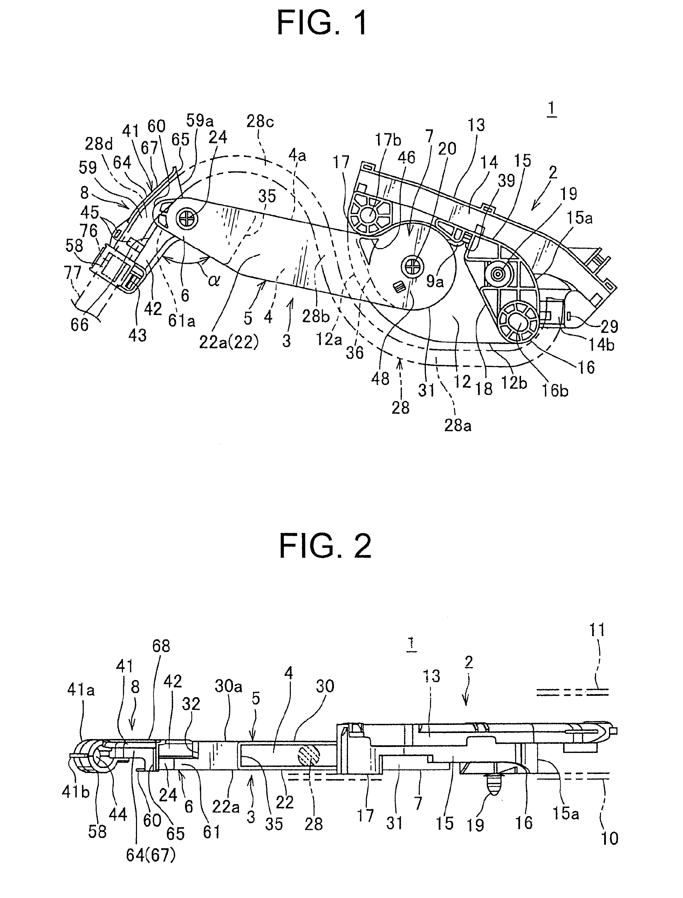

Figs. 1 to 3 illustrate an embodiment of an arm power supply device according to the invention.

The arm power supply device 1 is configured to include a small synthetic resin base member 2 which is vertically fixed to a metal door inner panel 10 (Fig. 2) of a slide door of an automobile, a long synthetic resin first arm 3 which is rotatably and axially supported to the base member 2 in the upward and downward direction and has an enclosure portion 5 in the center forming a slit 4 for inserting a wire harness , and a short synthetic resin second arm 8 which is rotatably and axially supported to a rotation tip 6 of the first arm 3 in the upward and downward direction and has a cover portion (a harness fixing portion) 58 on a rotation tip side of its own and a harness insertion groove 59 in a longitudinal direction. The second arm 8 includes an outer wall 64 of the harness insertion groove 59 in a bent shape or an inclined shape, and the outer wall 64 includes an outwardly bent portion 65 on a rotational base end side.

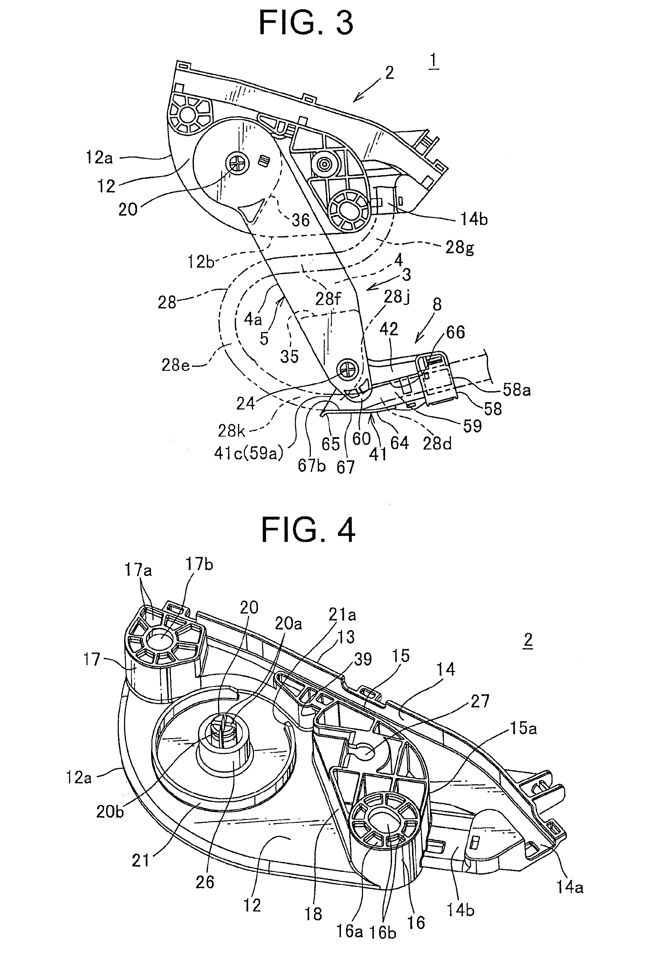

The arm power supply device 1 in this example is used for the sliding door of the left side of a vehicle, a near side in Figs. 1 and 3 indicates a vehicle outside (a side near the door panel 10 of Fig. 2) and a deep side indicates a vehicle inside (a side near a door trim 11 of Fig. 2). The left side (a side near the first arm 3) of Figs. 1 and 3 indicates the front side of the vehicle and the right side (a side near the base member 2) indicates the back side of the vehicle. Figs. 1 and 2 illustrate a state in which the second arm 8 on the rotation tip side is inclined forward downward while the first arm 3 is urged upward by an urging force of a spring member (a torsion coil spring) (not illustrated) on the rotational base end side 7 at the time when the slide door is half opened and a harness extra length is absorbed. Fig. 3 illustrates a state in which the second arm 8 is substantially horizontally positioned below the base member 2 while the first arm 3 rotates downward in the counterclockwise direction against an urging force of a spring member (not illustrated) at the time when the slide door is completely closed.

As illustrated in Figs. 1 and 2, the base member 2 is formed to have a longitudinal length almost the same degree as the entire length of the first arm 3 and a vertical length almost twice times the width of the first arm 3, and is miniaturized in the longitudinal and vertical directions. The thickness of the base member 2 is almost one and half times the thickness of the first arm 3, and is compacted in the width direction. Fig. 4 illustrates an embodiment of the base member 2.

As illustrated in Figs. 1 and 4, the base member 2 includes a base plate 12 which is substantially perpendicular in the vertical direction, an upper wall 13 which is inclined backward downward along the upper end of the base plate 12, a partition wall 15 which is disposed below the upper wall 13 with a harness guide (insertion) path 14 formed therebetween, a bottomed cylindrical fixing portion 16 which is provided on the lower end side of a bent rear portion 15a of the partition wall 15, a bottomed cylindrical fixing portion 17 which is provided on the upper end side of the front part of the partition wall 15 and also serves as a stopper to regulate an upward rotation angle (the clockwise direction) of the first arm 3 (Fig. 1), an inclined wall 18 which is inclined forward upward from the fixing portion 16 on the lower side and serves as a stopper to regulate a downwardly rotation angle (the counterclockwise direction) of the first arm 3, a fixing clip 19 (Figs. 1 and 2) which is provided between the inclined wall 18 and the rear semi-bent portion 15a of the partition wall 15, a shaft 20 (Fig. 4) which protrudes from the base plate 12 and supports the first arm, and a guide wall 21 which is formed in a substantially low annular shape.

The fixing portions 16 and 17 provided in the front and rear parts of the base member 2 respectively include bolt insertion holes 16b and 17b in bottom walls 16a and 17a. As illustrated in Fig. 2, the bottom walls 16a and 17a of the fixing portions 16 and 17 are in contact with the metal door inner panel 10 to be fastened and fixed by bolts and nuts (not illustrated), and the locking clip 19 passes through a hole (not illustrated) formed in the door inner panel 10 for engagement. The fixing portions 16 and 17 each protrude from the base plate 12 of the base member 2 toward the door inner panel 10, the rotational base end portion 7 in the annular shape (a circular shape in front view) of the first arm 3 is positioned in a nearly fan-shaped concave space (use symbol 12 in substitution) between the fixing portions 16 and 17 provided in the front and rear (upper and lower) parts along the base plate 12, and an outer surface 22 of the first arm 3 slightly recedes to the base plate 12 compared to the bottom walls 16a and 17a of the fixing portions 6 and 7.

The shaft 20 of the base member 2 includes a slit 20a (Fig. 4) which is flexible inward in a radial direction, and has a locking claw 20b at the tip. At the time when the shaft passes through a hole portion 23 (Fig. 7) on the base end side of the first arm 3, the locking claw 20b (Fig. 4) is engaged with the peripheral of the hole portion 23. A shaft 24 provided in the second arm 8 (Fig. 1) is also configured to be engaged with a hole portion 25 (Fig. 7) on the tip side of the first arm 3. A cylindrical wall portion 26 is provided in the surrounding area of the shaft 2 0 (Fig. 4) of the base member 2, and a guide peripheral wall 21 is provided on the outside thereof. Symbol 27 denoted in Fig. 4 indicates a portion on which the locking clip 19 is mounted.

The harness guide path 14 (Fig. 4) of the base member 2 is vertically branched in a short distance on the rear end side (upper and lower branch passages are denoted by symbols 14a and 14b), and as illustrated in Fig. 1, a main body (denoted by symbol 28) of a wire harness 28 passes through the lower side slightly lower than the lower end of the base plate 12 of the base member 2 along the lower branch passage 14b from the harness guide path 14, and then wired along the second arm 8 through the slit 4 in the enclosure portion 5 of the first arm 3 while being bent in an approximate S shape.

As illustrated in Fig. 1, a flange portion 60 is provided on the rotation tip of the first arm 3, the flange portion 60 on the rotation tip of the first arm 3 covers a part of the harness insertion groove 59 on an upper end portion 59a (on the rotational base end side) side of the harness insertion groove 59 of the second arm 8 and abuts (contact) on an outer peripheral surface of a wire harness portion 28d in the harness insertion groove 59, and prevents a wire harness 28 from escaping (clipping out) from the harness insertion groove 59.

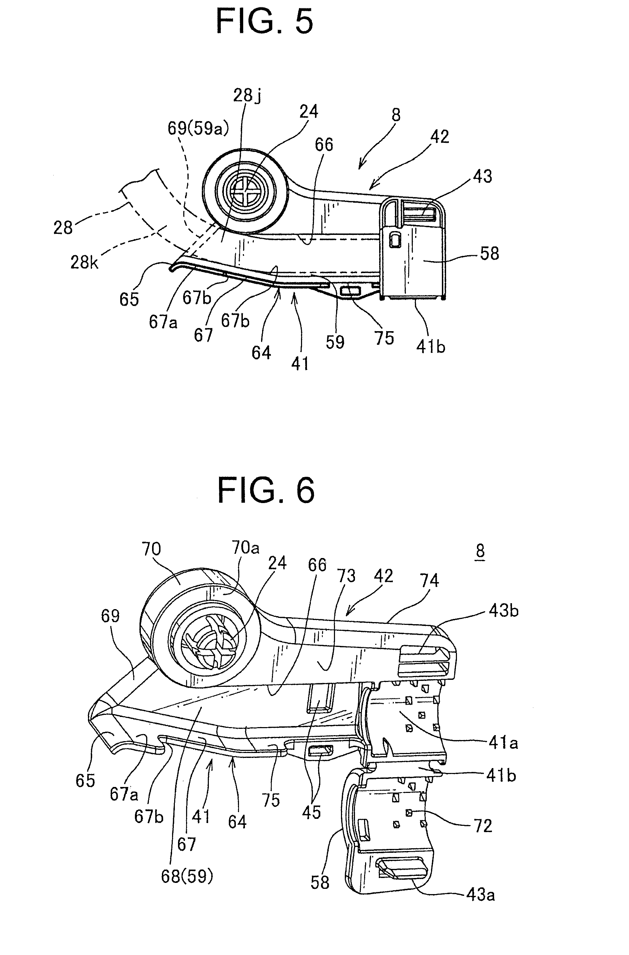

As illustrated in Figs. 1 and 2 (a state of the second arm 8 rotated to the upper side), Figs. 3 and 5 (a state of the second arm 8 rotated to the lower side), and Fig. 6 (a diagram of the single second arm 8), the second arm 8 is formed to have about the half or slightly shorter than the length of the first arm 3, includes a bent gutter portion 41 having the harness insertion groove 59 on the front side (the upper side) in Fig. 1, a base wall 42 which is approximately straight on the rear side (the lower side) in Fig. 1, the shaft 24 which is erected to the base end side of the base wall 42, and the cover portion (the harness fixing portion) 58 having a semicircular shape in cross-sectional view which is provided to be opened and closed by a thin hinge 41b in a portion 41a (Fig. 2) having a semicircular shape in cross-sectional view on a rotation tip side of the gutter portion 41.

As illustrated in Figs. 1, 3, 5, and 6, the gutter portion 41 of the second arm 8 includes the outer wall 64 which forms the upper side in Fig. 1 and the lower side in Fig. 3, an inner wall 66 which forms the lower side in Fig. 1 and the upper side in Fig. 3, and a side wall 68 which forms a bottom wall of the harness insertion groove 59 and faces a door trim 11 (Fig. 2), and the inner wall 66 is a part of the base wall 42, formed straight and is integrally continuous vertical to the side wall 68 in the base wall 42 while facing the door inner panel 10 (Fig. 2).

As illustrated in Figs. 5 and 6, the outer wall 64 of the gutter portion 41 of the second arm 8 includes a straight wall portion 75 which is formed continuously on the portion 41a which has a semicircular shape in cross-sectional view while facing the cover portion 58 on the rotation tip side and a guide wall portion 67 which is inclinedorbent from the straight wall portion 75 toward the shaft 24 at a position corresponding to about one-half of the length of the gutter portion 41 and continuously formed to be integral with the straight wall portion 75 by almost the same length or longer. The straight wall portion 75 and the inclined or bent guide wall portion 67 intersect in a V shape in front view.

As illustrated in Fig. 6, a rotational base end portion 67a of the guide wall portion 67 is formed widely and integrally continues with almost twice the width of the center portion of the longitudinal direction from the center portion of the guide wall portion 67 in the longitudinal direction through a step portion 67b. As illustrated in Fig. 5, an inclined or bent inner surface 67b of the guide wall portion 67 is positioned to face the front side of the cover portion 58 which is the harness fixing portion on the rotation tip side, and an almost-horizontal virtual axial line of the cover portion 58 in a semicircle in side view intersects with a front end (rotational base end) side 67a of the guide wall portion 67.

In the rotational base end (an end portion which is the upper end of the guide wall portion 67 in Fig. 1, and the front end of the guide wall portion 67 in Fig. 3) of a widened portion 67a of the guide wall portion 67, a bent end portion 65 which is short and smoothly bent in a relatively large radius is integrally formed to protrude outwardly (upwardly in Fig. 1, and downwardly in Fig. 5). As illustrated in Fig. 6, the bent end portion 65 of the guide wall portion 67 is extended even to the end portion of the side wall 68 which is the bottom wall of the harness insertion groove 59, and the bent end portion 69 of the end portion of the side wall 68 protrudes by a protruding length corresponding to about the half of the bent end portion 65 of the guide wall 67 while being outwardly bent similarly to the bent end portion 65 of the guide wall 67.

The bent end portion 65 of the guide wall 67 corresponds to the bending of the wire harness 28 in the upward and downward direction, the bent end portion 69 of the side wall 68 corresponds to the bending of the wire harness 28 in the right and left direction (a thickness direction of the slide door), each of which prevents an edge abutting between the wire harness 28 and the rotation base end of a gutter wall 41 to prevent damage on the wire harness 28 and enables the wire harness 28 to be smoothly bent in an outward, large radium.

As illustrated in Fig. 6, the outer wall 64 of the gutter portion 41 of the second arm 8 is formed to be extended longer than the inner wall 66 to the rotational base end side, the bent end portion 69 in the rotational base end of the side wall 68 is continuously formed while intersecting with a peripheral surface on the bottom surface side of an annular wall 70 in which the shaft 24 protrudes in the base wall 42. An end surface 70a of the annular wall 70 on the projected shaft side is formed continuously on a wall surface (wall portion) 73 which is flat in the vertical direction of the base wall 42, and the peripheral surface of the annular wall 70 is formed continuously on a wall surface (wall portion) 74 in the horizontal direction of the base wall 42.

The harness insertion groove 59 of the gutter portion 41 is offset outwardly (a radial direction of the shaft 24) to the shaft 24 of the base wall 42. The cover portion 58 is connected to the thin hinge 41b to be freely opened or closed while facing the portion 41a having a semicircular shape in cross-sectional view on the rotation tip side of the gutter portion 41, and the cover portion 58 is engaged with the base wall 42 by an engagement means 43 (a claw portion 43a and a partition piece 43b of a hole portion) in a closed state of Fig. 5.

As illustrated in Fig. 6, in the cover portion 58 and the portion 41a having a semicircular shape in cross-sectional view on the rotation tip side of the gutter portion 41, for example, there is provided a sharp projection 72 provided to make the end portion of a small-radius synthetic resin mesh tube (protection tube) 76 of the outer peripheral of the wire harness 28 topass through and be fixed to the endportionof a large-radius corrugate tube (protection tube) 77 through a tape winding portion (not illustrated). A hole portion (the harness fixing portion) 45 is provided in the gutter portion 41 adjacent to the cover portion (the harness fixing portion) 58 on the rotation tip in order to fasten and fix the wire harness 28 by a binding band (not illustrated). The gutter portion 41 is offset to the front side from the shaft 24 in Fig. 1 to the upper side (front side), is offset from the shaft 24 to the lower side in Fig. 3.

As illustrated in Fig. 5, when the second arm 8 rotates to the lower side and is positioned to be substantially horizontal, the wire harness 28 fixed by the cover portion 58 on the rotation tip side of the second arm 8 is guided in an inclined upward direction (the portion guided in the inclined upward direction while being bent is denoted by symbol 28j of Fig. 5) while being bent in a large radius along the inclined or bent guide wall portion 67 in the first half of the outer wall 64 of the gutter portion 41 in the harness insertion groove 59 of the second arm 8, and is derived out of an opening 59a on the rotational base end side of the harness insertion groove 59 in a large-radius bent shape inclined upward (the portion derived in the bent shape is denoted by symbol 28k of Fig. 5).

Therefore, the wire harness 28 is prevented from hanging down from the rotational base end side of the second arm 8, and thus an interference between the lower end of the door trim 11 (Fig. 2) with peripheral components (not illustrated) due to the hanging-down wire harness 28 and a degradation in appearance due to the exposed portion hanging down out of the lower end of the door trim 11 are prevented.

Further, as illustrated in Figs. 3 and 5, when the second arm 8 is positioned on the lower side to be substantially horizontal, the outer wall 64 on the lower side of the gutter portion 41 of the second arm 8 is extended to the front side (the rotational base end side) longer than the inner wall 66 on the upper side, and the guide wall portion 67 in the first half (therotationalbaseendside) of the outer wall 64 is inclined or bent forward upward, so that the wire harness 28 is deflected only upward from the front end side (the rotational base end side) of the guide wall portion 67, the deflecting amount of the wire harness 28 in the upward and downward direction is suppressed small while the wire harness 28 is prevented from being deflected downward (the deflection on both sides in the related art is prevented), and the bending stress on the wire harness 28 is reduced and the bending resistance is improved.

Fig. 3 illustrates a state in which the second arm 8 further rotates in the counterclockwise direction to be raised on the rear side compared to Fig. 5, in which the wire harness 28 is wired along the harness insertion groove 59 to be lowered on the front side from the cover portion (the harness fixing portion) 58 on the rotation tip side of the second arm 8, is bent and inclined forward upward along the inner surface 67b of the guide wall portion 67 (the portion which is bent and inclined upward is denoted by symbol 28j) while being in contact with the inner surface 67b of the inclined or bent guide wall portion 67 on the rotational base end side (the first half) of the harness insertion groove 59 forward upward, and derived from the opening 59a on the base end side of the harness insertion groove 59 upward while being bent in a large radius (the portion derived while being bent in a large radius is denoted by symbol 28k).

As illustrated in Figs. 1 and 3, one end of the wire harness 28 is wired from the harness guide path 14 of the base member 2 toward the sliding door, and the other end of the wire harness 28 is wired up to a harness supporter (not illustrated) on a vehicle body side through the cover portion 58 on the rotation tip side of the second arm 8. The wire harness 28 is fixed by a binding band (not illustrated) in the branch passage (the harness fixing portion) 14b on the lower side of the harness guide path 14 (a band insertion hole is denoted by symbol 29), and is interposed and fixed by a cover portion (the harness fixing portion) 58 on a rotation tip side of the second arm 8.

As illustrated in Figs. 1, 2, and 7 (a diagram of the single first arm 3), the first arm 3 includes wall surfaces 22a and 30a (Fig. 2) which are flat and straight on front and back sides (outside and inside), an annular portion (the annular shape wall) 31 (Fig. 1) which is formed straight in the surrounding area of a circular wall portion 48 on the same plane as the wall surface 22a on the front side and has a depth equal to the interval of the wall surfaces 22a and 30a on the front side, a portion on the rotation tip side 6 which is formed continuously on the same plane as the wall surface 22a on the front side and connected to the wall surface 30a on the back side through a step portion 32 (Fig. 2) while the tip width is tapered, the flange portion 60 which protrudes to the portion on the rotation tip side 6, the slit 4 which is formed between the annular portion 31 on the rotational base end side and the portion on the rotation tip side 6 to insert the harness between plate wall portions 22 and 30 forming the wall surfaces 22a and 30a on the front and back sides, plate inclined wall portions (the inclined walls) 3 5 and 3 6 which are formed in the front and rear parts and intersect with the plate wall portions 22 and 30 on the front and back sides to form the inner surfaces in the front and rear parts of the slit 4, and the enclosure portion 5 which is surrounded on all sides by the wall portions 22, 30, 35, and 36.

As illustrated in Fig. 7, a tip surface 61a of a plate portion 61 is formed in an arc shape in plan view, and the flange portion 60 is formed to protrude from the arc-shape tip surface 61a of the plate portion 61. A cylindrical bearing 38 which includes a hole portion 25 to axially support the second arm 8 in the substantially center portion of the plate portion 61 is formed to protrude toward the step portion 32.

As illustrated in Figs. 1 and 7, the slit 4 surrounded on all sides by the enclosure portion 5 which includes the plate wall portions 22, 30, 35, and 36 surrounding the first arm 3 back and forth and left and right is formed in an approximate chevron shape (the taper shape) in vertically cross-sectional view such that an opening 4b on the lower end side is widened and an opening 4a on the upper end side is narrowed when the first arm 3 is substantially horizontally positioned. An inclined wall 36 on the rear side (near the rotational base end) of the slit 4 includes an arc-shape wall portion 36a which is a part of the circular, annular wall 31 on the rotational base end side and a straight wall portion (use symbol 36 in substitution) which is extended straight from the arc-shape wall portion 36a in a tangential direction. The inner surface of the inclined wall 36 on the rear side serves as a contact surface for guiding the wire harness 28.

As illustrated in Fig. 7, a cylindrical bearing member 38 is integrally provided in the plate portion 61 through the step portion 32 on the rear side of the rotation tip 6 of the first arm 3 to support the shaft 24 of the second arm 8 (Fig. 6) to be freely rotated. Further, a notch portion 40 is provided in the latter half of the annular wall 31 on the rotational base end side of the first arm 3 such that one end portion 9a (Fig. 1) of the spring member (the torsion coil spring) (not illustrated) is made to protrude to be engaged with a concave portion 39 of the partition wall 15 of the base member 2 of Fig. 1.

As illustrated in Fig. 1, while being bent downward in the approximate semicircular shape from the harness fixing portion (the branch passage) 14b on the rear portion side of the base member 2, the wire harness 28 passes through the slit 4 in the enclosure portion 5 of the first arm 3 from the downwardly bent portion 28a (the harness insertion portion is denoted by symbol 28b) and bent upward in the approximate semicircular shape (the upwardly bent portion is denoted by symbol 28c), and is fixed by the binding band which is the harness fixing portion on the rotation tip side of the second arm 8 (the band insertion hole is denoted by symbol 45) and the cover portion 58 while being wired in the bent shape along the second arm 8 (the harness wired portion is denoted by symbol 28d).

As illustrated in Figs. 1 and 2, since the wire harness 28 is inserted (passing through) in the slit 4 of the first arm 3, the wire harness 28 freely moves in the longitudinal direction of the first arm 3 when the first arm 3 rotates according to opening and closing of the slide door, and the movement of the wire harness 28 to the width direction of the first arm 3 is prevented so that the trajectory of the wire harness 28 becomes stable. Further, since the wire harness 28 is smoothly bent in a large radius along an inclined or bent guide wall 64 on the upper side in the latter half of the outer wall 64 of the gutter portion 41 of the second arm 8, the wire harness 28 is smoothly bent upward in a large radius from the rear end (rotational base end) 59a of the second arm 8 through the slit 4 of the first arm 3 (the upwardly bent portion is denoted by symbol 28c).

Further, since the wall portion 22 on the front (outer) side of the enclosure portion 5 of the first arm 3 serves as a cover of the power supply device in the related art, the movement of the wire harness 28 to the outside of the vehicle is regulated (prevented) to prevent the interference between a member (the door inner panel 10 and the like) on the outside of the vehicle and the wire harness 28. Therefore, the cover becomes unnecessary, and the power supply device 1 is simplified and the cost is lowered.

The wire harness 28, for example, wraps the end portion of the corrugate tube 77 through a tape winding portion (not illustrated) on an outer peripheral side of the end portion of the mesh tube 76 to be interposed and fixed into the cover portion 58 in a state where a plurality of electric lines are covered with a small-radius synthetic resin mesh tube (protection tube) 76 having a good bending property in a range from the base member 2 to the cover portion 58 of the second arm 8 and the plurality of electric lines are covered with a large-radius synthetic resin corrugate tube (protection tube) 77 also in a range from the cover portion 58 to the harness supporter on a side near the vehicle body through a connection portion between the sliding door and the vehicle body. As illustrated in Fig. 2, the base wall 42 of the second arm 8 is positioned in the step portion 32 on the rotation tip side of the first arm 3, a circular harness insertion space 44 in the cover portion 58 is positioned collinearly (on a vertical plane) to the slit 4 for inserting the harness of the first arm 3, and the wire harness 28 is bent in the upward and downward direction without deviation in position in the right and left direction (the thickness direction of the slide door) from the cover portion 58 to the slit 4.

For example, even in a case where the wire harness 28 is shaken in the right and left direction, since the small bent portion 69 is formed at the rotational base end of the side wall 68 of the gutter portion 41 of the second arm 8 as illustrated in Fig. 6, the wire harness 28 comes in contact with the inner surface of the bent portion 69 and thus damage on the outer peripheral surface of the wire harness 28 is prevented, and the wire harness 28 becomes smoothly bent in the right and left direction along a bent portion 69.

In a half-open state of the sliding door of Fig. 1, the first arm 3 is urged upward by an urging force of the spring member 9, the bent upper wall surface 46 on the front side formed continuously on the annular wall 31 on the base end side of the first arm 3 is in contact with the bent lower surface of the cylindrical fixing portion 17 on the front side of the base member 2, the upward rotation of the first arm 3 is prevented, the wire harness 28 is lifted up together with the first arm 3, and the bent harness portion 28a is prevented from being hanging down along the lower end 12b of the base member 2. The first arm 3 is slightly inclined upward from the horizontal level, the second arm 8 is inclined downward, and an angle α formed between both arms 3 and 8 becomes an obtuse angle of 90° or larger or an acute angle of 90° or smaller.

When the sliding door is further slid from the state of Fig. 1 to the rear side of the vehicle to be completely opened (the power supply device 1 retreats integrally with the sliding door), the wire harness 28 is pulled from the harness supporter (rotation clamp) (not illustrated) on the front side of the vehicle body with respect to the second arm 8, the second arm 8 rotates upward (the clockwise direction) about the shaft 24 on the base end side, the first arm 3 rotates downward (the counterclockwise direction) about the shaft 20 on the base end side, and both the arms 3 and 8 is extended on a substantially straight line. At this time, the wire harness 28 is further extended in a straight line compared to Fig. 1.

At this time, even though the wire harness 28 is asserted by a force of bending upward from the rear end (rotational base end) 59a of the outer wall 64 on the upper side of the gutter portion 41 of the second arm 8, since the small bent portion 65 is formed to be bent upward in the rotational base end 59a of the outer wall 64 of the gutter portion 41, the wire harness 28 comes in smooth contact with the bent portion 65 so as to prevent the damage on the outer peripheral surface of the wire harness 28 , and the wire harness is smoothly bent downward through the slit 4 of the first arm 3 while being smoothly bent slightly upward along the bent portion 65. Therefore, with the configuration of the bent portion 28c which is smoothly bent upward, the bending stress on the wire harness 28 is reduced and the bending resistance is improved.

Further, the wire harness 28 is further extended in a straight line compared to Fig. 1, the harness portion 28b passed through in the slit 4 of the first arm 3 is in contact along the inclined wall 36 on the rear side of the slit 4 to be inclined upward as illustrated in Fig. 4, and the harness portion 28c on the upper side formed continuously on the inclined harness portion 28b and the harness portion 28a on the lower side are smoothly bent in a large radius, so that a small-radius bending which adversely affects the wire harness 28 is prevented.

When the sliding door is slid from the half-open state of Fig. 1 to the front side of the vehicle to be completely closed, as illustrated in Fig. 3, the wire harness 28 is pulled to the rear side from the harness supporter (not illustrated) on the rear side of the vehicle body, the first arm 3 rotates downward about the shaft 20 on the base end side (the counterclockwise direction), and the second arm 8 rotates about the shaft 24 on the base end side to be substantially horizontal and slightly upward (the counterclockwise direction) on the lower side of the first arm 3. For example, the harness supporter (not illustrated) on a side near the vehicle body is disposed to the rear side to be separated from a rotation tip 58a of the second arm 8 of Fig. 3 by a distance equal to about two or more times the entire lengthof the first arm 3 to be substantially horizontal. The open angle formed between the both arms 3 and 8 in the example of Fig. 3 is an obtuse angle of about 90°.

As illustrated in Fig. 3, the wire harness 28 is bent forward from a front end 41c of the gutter portion 41 of the second arm 8 (the forward bent portion is denoted by symbol 28e), passes through the slit 4 in the enclosure portion 5 of the first arm 3 (the insertion portion passing through the slit 4 is denoted by symbol 28f), bent upward on the rear side of the first arm 3 (the upwardly bent portion is denoted by symbol 28g), and connected to the harness fixing portion 14b on the lower rear side of the base member 2. In Fig. 3, the inclined wall 35 on the rotation tip side of the slit 4 of the first arm 3 is positioned substantially horizontal, and makes the wire harness 28 smoothly inserted in the slit 4 without causing interference with the inclined wall 35.

In addition, the embodiment has been described about the sliding door on the left side of the vehicle, and the sliding door on the right side of the vehicle has the same configurations and actions except that the arrangement is symmetrical to the sliding door on the left side. Further, the state when the sliding door is closed may be set to a state similar to a mirror-inverted (front and rear) state of Fig. 1, and the state when the sliding door is opened may be set to a state similar to a mirror-inverted (front and rear) state of Fig. 3.

Further, the arm power supply device may be applied to the sliding door of a vehicle other than that of automobile and the sliding door of an apparatus other than that of the vehicle. The sliding door is collectively referred to as a sliding structure, and the vehicle body and the apparatus body are collectively referred to as a fixed structure.

### Industrial Applicability

In the arm power supply device according to the invention, in a case where the wire harness is fixed only to the rotation tip side of the second arm axially supported to the first arm, when the second arm rotates and is positioned to the lower side, the wire harness is prevented from hanging down from the rotational base end side of the second arm and the wire harness derived from the rotational base end side of the second arm is prevented from being shaken in the upward and downward direction. In addition, when the second arm rotates and is positioned to the upper side, the wire harness is smoothly derived upward from the rotational base end side of the second arm without stress, and thus the arm power supply device can be utilized to increase the bending resistance of the wire harness.

### Reference Sings List

1: Arm power supply device
2: Base member
3: First arm
8: Second arm
28: Wire harness
58: Cover portion (harness fixing portion)
59: harness insertion groove
64: outer wall
65: bent portion
66: inner wall
67: guide wall portion
68: side wall
69: bent portion

## Claims

1. An arm power supply device comprising:
a first arm configured to be rotatably and axially supported to a base member; and
a second arm configured to be rotatably and axially supported on a rotation tip side of the first arm,
wherein the second arm includes a harness insertion groove and a harness fixing portion on a rotation tip side,
wherein an outer wall of the harness insertion groove is extended longer than an inner wall on a rotational base end side,
wherein the outer wall includes an inclined or bent guide wall portion on the rotational base end side, and
wherein a wire harness is guided upward along the guide wall portion when the second arm rotates to the lower side.

2. The arm power supply device according to claim 1, wherein
an outwardly bent portion is formed in the rotational base end of the guide wall portion.

3. The arm power supply device according to claim 2, wherein
the bent portion is formed to be extended even in the rotational base end of a side wall connecting the outer wall of the harness insertion groove and the inner wall.
